(19) Europäisches Patentamt
European Patent Office
Office européen des brevets

(11) EP 1 778 775 B1

(12) **EUROPÄISCHE PATENTSCHRIFT**

(45) Veröffentlichungstag und Bekanntmachung des Hinweises auf die Patenterteilung:
**15.09.2010 Patentblatt 2010/37**

(21) Anmeldenummer: **05774061.5**

(22) Anmeldetag: **18.07.2005**

(51) Int Cl.:
***C08K 3/36*** *(2006.01)* ***C08L 69/00*** *(2006.01)*

(86) Internationale Anmeldenummer:
**PCT/EP2005/007789**

(87) Internationale Veröffentlichungsnummer:
**WO 2006/010518 (02.02.2006 Gazette 2006/05)**

(54) **FORMKÖRPER MIT HOHER LICHTSTREUUNG UND HOHER LICHTTRANSMISSION**

MOLDED BODY WITH HIGH LIGHT SCATTERING AND LIGHT TRANSMISSION

ELEMENT MOULE A DIFFUSION DE LUMIERE ET TRANSMISSION DE LUMIERE ELEVEES

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **26.07.2004 DE 102004036249**

(43) Veröffentlichungstag der Anmeldung:
**02.05.2007 Patentblatt 2007/18**

(73) Patentinhaber: **Bayer MaterialScience AG
51368 Leverkusen (DE)**

(72) Erfinder:
- **RÜDIGER, Claus
47798 Krefeld (DE)**
- **GORNY, Rüdiger
Moon Twp., Pennsylvania 15108 (US)**
- **ROELOFS, Marco
47807 Krefeld (DE)**
- **RÖHNER, Jürgen
51069 Köln (DE)**
- **SCHWARZ, Peter
47800 Krefeld (DE)**

(56) Entgegenhaltungen:
**EP-A- 0 269 324 EP-A- 0 634 445
US-A- 4 460 733 US-A- 5 258 215**

- **DATABASE WPI Section Ch, Week 200142 Derwent Publications Ltd., London, GB; Class A18, AN 1993-348596 XP002354140 -& JP 05 255569 A (POLYPLASTICS KK) 5. Oktober 1993 (1993-10-05)**
- **DATABASE WPI Section Ch, Week 199345 Derwent Publications Ltd., London, GB; Class A23, AN 1993-354105 XP002354141 -& JP 05 257002 A (TEIJIN CHEM LTD) 8. Oktober 1993 (1993-10-08)**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 1 778 775 B1

**Beschreibung**

Die vorliegende Erfindung betrifft eine lichtstreuende Zusammensetzung aus einem transparenten aromatischen Polycarbonat, und Kombination aus einerseits anorganischen Teilchen auf Basis von Siliziumdioxid und andererseits polymerer Teilchen auf Acrylatbasis mit einer Kern-Schale-Morphologie, sowie Formkörper aus dieser Zusammensetzung.

Diese Zusammensetzung beziehungsweise Formkörper weisen eine hohe Lichttransmission bei gleichzeitig hoher Lichtstreuung auf und können in vielen Bereichen zum Einsatz kommen, bei denen eine hohe Lichttransmission bei gleichzeitiger hoher Lichtstreuung gewünscht ist. Solche Anwendungen sind beispielsweise Abdeckungen von Beleuchtungssystemen, bei denen die meistens verwendeten punktuellen Lichtquellen nicht mehr als solche wahrgenommenen werden sollen, sondern das Licht gleichmäßig über eine große Fläche abgegeben werden soll. Derartige Beleuchtungssysteme kommen in der Innenbeleuchtung von Räumen, Treppenhäusem, Hallen oder Transportmitteln wie Bahn, Auto und Flugzeug zum Einsatz.

Auch in der Elektronik-Industrie kommen lichtstreuende Platten beispielsweise in den Beleuchtungssystemen von Flachbildschirmen (LCD-Bildschirmen) zum Einsatz. Auch hier ist eine hohe Lichtstreuung bei gleichzeitiger hoher Lichttransmission von großem Vorteil. Das Beleuchtungssystem solcher Flachbildschirme kann entweder mit seitlicher Lichteinkopplung erfolgen (Edgelight System) oder bei größeren Bildschirmgrößen, bei denen die seitliche Lichteinkopplung nicht mehr ausreichend ist, über eine Backlight-Unit, bei der die direkte Beleuchtung hinter der Diffuserplatte durch diese möglichst gleichmäßig verteilt werden muss.

Aus dem Stand der Technik sind lichtstreuende transluzente Erzeugnisse aus Polycarbonat mit verschiedenen lichtstreuenden Zusatzstoffen bekannt.

So offenbart beispielsweise EP-A 634 445 lichtstreuende Zusammensetzungen, welche polymere Partikel auf Vinyl-Acrylat-Basis mit einer Kern/Schale Morphologie in Kombination mit $TiO_2$ enthalten.

In DE-A 22 51 708 wird die Verwendung von Bariumsulfat als Streupigment in transparenten thermoplastischen Kunststoffen beschrieben.

Die Verwendung von lichtstreuenden Polycarbonatfolien in Flachbildschirmen ist in- US 2004/0066645 beschrieben. Als lichtstreuende Pigmente werden hier Polyacrylate, PMMA, Polytetrafluoroethylerie, Polyalkyltrialkoxysiloxane und Mischungen aus diesen Komponenten genannt.

Die bekannten lichtstreuenden Zusammensetzungen weisen jedoch bei vorgegebener Lichtstreuung immer noch keine befriedigende Lichttransmission auf.

Es wurde jetzt überraschenderweise gefunden, dass diese erwünschte Eigenschafiskombination erreicht werden kann durch eine lichtstreuende Zusammensetzung enthaltend einen transparenten Thermoplasten, insbesondere Polycarbonat, und eine Kombination aus einerseits anorganischen Teilchen auf Basis von Siliziumdioxid und andererseits polymerer Teilchen auf Acrylatbasis mit einer Kern-Schale-Morphologie. Die anorganischen Partikel können direkt ohne weitere Behandlung in Polycarbonat durch gängige Compoundierungsverfahren eingebracht werden, oder sie können zuvor mit einem Coating versehen werden und anschließend eingebracht werden. Die so hergestellten Zusammensetzungen weisen bei vorgegebener Lichtstreuung überraschenderweise eine ungewöhnlich hohe Lichttransmission auf. Insbesondere ist überraschenderweise bei der Kombination der anorganischen und der organischen Streupigmente bei gleicher Lichtstreuung im Vergleich zu den einzelnen Streupigmenten eine erhöhte Lichttransmission zu erkennen.

Gegenstand der vorliegenden Erfindung ist daher eine Zusammensetzung enthaltend 60 bis 99.98 Gewichts-% eines transparenten aromatischen polycarbonats, 0,01 bis 20 Gewichts-%, bevorzugt 0,1 bis 10 Gewichts-%, besonders bevorzugt 0,1 bis 5 Gewichts-% anorganischen Teilchen auf Basis von Siliziumdioxid und 0,01 bis 20 Gewichts-%, bevorzugt 0,1 bis 10 Gewichts-%, besonders bevorzugt 0,1 bis 5 Gewichts-% polymerer Teilchen auf Acrylatbasis mit einer Kem-Schale-Morphologie.

Geeignete Polycarbonate für die Herstellung der erfindungsgemäßen mehrschichtigen Erzeugnisse sind alle bekannten Polycarbonate. Dies sind Homopolycarbonate, Copolycarbonate und thermoplastische Polyestercarbonate.

Die geeigneten Polycarbonate haben bevorzugt mittlere Molekulargewichte $\overline{M}_w$ von 18.000 bis 40.000, vorzugsweise von 26.000 bis 36.000 und insbesondere von 28.000 bis 35.000, ermittelt durch Messung der relativen Lösungsviskosität in Dichlormethan oder in Mischungen gleicher Gewichtsmengen Phenol/o-Dichlorbenzol geeicht durch Lichtstreuung.

Zur Herstellung von Polycarbonaten sei beispielhaft auf "Schnell, Chemistry and Physics of Polycarbonats, Polymer Reviews, Vol. 9, Interscience Publishers, New York, London, Sydney 1964", und auf "D.C. PREVORSEK, B.T. DEBONA and Y. KESTEN, Corporate Research Center, Allied Chemical Corporation, Moristown, New Jersey 07960, 'Synthesis of Poly(ester)carbonate Copolymers' in Journal of Polymer Science, Polymer Chemistry Edition, Vol. 19, 75-90 (1980)", und auf "D. Freitag, U. Grigo, P.R. Müller, N. Nouvertne, BAYER AG, 'Polycarbonates' in Encyclopedia of Polymer Science and Engineering, Vol. 11, Second Edition, 1988, Seiten 648-718" und schließlich auf "Dres. U. Grigo, K. Kircher und P.R. Müller 'Polycarbonate' in Becker/Braun, Kunststoff-Handbuch, Band 3/1, Polycarbonate, Polyacetale, Polyester, Celluloseester, Carl Hanser Verlag München, Wien 1992, Seiten 117-299" verwiesen.

Die Herstellung der Polycarbonate erfolgt vorzugsweise nach dem Phasengrenzflächenverfahren oder dem Schmelze-Umesterungsverfahren und wird im folgenden beispielhaft an dem Phasengrenzflächenverfahren beschrieben.

Als Ausgangsverbindungen bevorzugt einzusetzende Verbindungen sind Bisphenole der allgemeinen Formel

HO-Z-OH,

worin

Z ein divalenter organischer Rest mit 6 bis 30 Kohlenstoffatomen ist, der eine oder mehrere aromatische Gruppen enthält.

Beispiele solcher Verbindungen sind Bisphenole, die zu der Gruppe der Dihydroxydiphenyle, Bis(hydroxyphenyl)alkane, Indanbisphenole, Bis(hydroxyphenyl)ether, Bis(hydroxyphenyl)sulfone, Bis(hydroxypheriyl)ketone und $\alpha,\alpha'$-Bis(hydroxyphenyl)-diisopropylbenzole gehören.

Besonders bevorzugte Bisphenole, die zu den vorgenannten Verbindungsgruppen gehören, sind Bisphenol-A, Tetraalkylbisphenol-A, 4,4-(meta-Phenylendiisopropyl) diphenol (Bisphenol M), 4,4-(para-Phenylendiisopropyl)-diphenol, 1,1-Bis-(4-hydroxyphenyl)-3,3,5-trimethylcyclohexan (Bisphenol-TMC) sowie deren Gemische.

Bevorzugt werden die erfindungsgemäß einzusetzenden Bisphenolverbindungen mit Kohlensäureverbindungen, insbesondere Phosgen, oder beim Schmelzeumesterungsprozess mit Diphenylcarbonat bzw. Dimethylcarbonat, umgesetzt.

Polyestercarbonate werden bevorzugt durch Umsetzung der bereits genannten Bisphenole, mindestens einer aromatischen Dicarbonsäure und gegebenenfalls Kohlensäureäquivalente erhalten. Geeignete aromatische Dicarbonsäuren sind beispielsweise Phthalsäure, Terephthalsäure, Isophthalsäure, 3,3'- oder 4,4'-Diphenyldicarbonsäure und Benzophenondicarbonsäuren. Ein Teil, bis zu 80 Mol.-%, vorzugsweise von 20 bis 50 Mol-% der Carbonatgruppen in den Polycarbonaten können durch aromatische Dicarbonsäureester-Gruppen ersetzt sein.

Beim Phasengrenzflächenverfahren verwendete inerte organische Lösungsmittel sind beispielsweise Dichlormethan, die verschiedenen Dichlorethane und Chlorpropanverbindungen, Tetrachlormethan, Trichlormethan, Chlorbenzol und Chlortoluol, vorzugsweise werden Chlorbenzol oder Dichlormethan bzw. Gemische aus Dichlormethan und Chlorbenzol eingesetzt.

Die Phasengrenzflächenreaktion kann durch Katalysatoren wie tertiäre Amine, insbesondere N-Alkylpiperidine oder Oniumsalze beschleunigt werden. Bevorzugt werden Tributylamin, Triethylamin und N-Ethylpiperidin verwendet. Im Falle des Schmelzeumesterungsprozesses werden bevorzugt die in DE-A 42 38 123 genannten Katalysatoren verwendet.

Die Polycarbonate können durch den Einsatz geringer Mengen Verzweiger bewusst und kontrolliert verzweigt werden. Einige geeignete Verzweiger sind: Phloroglucin, 4,6-Dimethyl-2,4,6-tri-(4-hydroxyphenyl)-hepten-2; 4,6-Dimethyl-2,4,6-tri-(4-hydroxyphenyl)-heptan; 1,3,5-Tri-(4-hydroxyphenyl)-benzol; 1,1,1-Tri-(4-hydroxyphenyl)-ethan; Tri-(4-hydroxyphenyl)-phenylmethan; 2,2-Bis-[4,4-bis-(4-hydroxyphenyl)-cyclohexyl]-propan; 2,4-Bis-(4-hydroxyphenyl-isopropyl)-phenol; 2,6-Bis-(2-hydroxy-S'-methyl-benzyl)-4-methylphenol; 2-(4-Hydroxyphenyl)-2-(2,4-dihydroxyphenyl)-propan; Hexa-(4-(4-hydroxyphenyl-isopropyl)-phenyl)-orthoterephthalsäureester; Tetra-(4-hydroxyphenyl)-methan; Tetra-(4-(4-hydroxyphenyl-isopropyl)-phenoxy)-methan; $\alpha,\alpha',\alpha''$-Tris-(4-hydroxyphenyl)-1,3,5-triisopropylbenzol; 2,4-Dihydroxybenzoesäure; Trimesinsäure; Cyanurchlorid; 3,3-Bis-(3-methyl-4-hydroxyphenyl)-2-oxo-2,3-dihydroindol; 1,4-Bis-(4',4''-dihydroxytriphenyl)-methyl)-benzol und insbesondere: I,I,I-Tri-(4-hydroxyphenyl)-ethan und Bis-(3-methyl-4-hydroxyphenyl)-2-oxo-2,3-dihydroindol.

Die gegebenenfalls mitzuverwendenden 0,05 bis 2 Mol-%, bezogen auf eingesetzte Diphenole, an Verzweigern bzw. Mischungen der Verzweigern, können mit den Diphenolen zusammen eingesetzt werden aber auch in einem späteren Stadium der Synthese zugegeben werden.

Als Kettenabbrecher werden bevorzugt Phenole wie Phenol, Alkylphenole wie Kresol und 4-tert.-Butylphenol, Chlorphenol, Bromphenol, Cumylphenol oder deren Mischungen verwendet in Mengen von 1-20 Mol-% bevorzugt 2-10 Mol-% je Mol Bisphenol. Bevorzugt sind Phenol, 4-tert.-Butylphenol bzw. Cumylphenol. Kettenabbrecher und Verzweiger können getrennt oder aber auch zusammen mit dem Bisphenol den Synthesen zugesetzt werden.

Die Herstellung der Polycarbonate nach dem Schmelzeumesterungsprozess ist in DE-A 42 38 123 beispielhaft beschrieben.

Erfindungsgemäß bevorzugte Polycarbonate sind das Homopolycarbonat auf Basis von Bisphenol A, das Homopolycarbonat auf Basis von 1,1-Bis-(4-hydroxyphenyl)-3,3,5-trimethylcyclohexan und die Copolycarbonate auf Basis der beiden Monomere Bisphenol A und 1,1-Bis-(4-hydroxyphenyl)-3,3,5-trimethylcyclohexan und die Copolycarbonate auf Basis der beiden Monomere Bisphenol A und 4,4'-Dihydroxydiphenyl (DOD).

Das Homopolycarbonat auf Basis von Bisphenol A ist besonders bevorzugt.

Bei den erfindungsgemäß einzusetzenden anorganischen Teilchen auf Basis von Siliziumdioxid a) handelt es sich beispielsweise und bevorzugt um amorphe Kieselsäure, die in wässriger Suspension einen pH-Wert von 5 bis 9, bevorzugt von 6 bis 8 aufweist.

Die gewichtsmittlere Partikelgröße der verwendeten anorganischen Teilchen auf Basis von Siliziumdioxid beträgt von 2 bis 50 μm und besonders bevorzugt von 5 bis 20 μm.

Besonders geeignete anorganische Teilchen auf Basis von Siliziumdioxid sind solche, die sich ohne weitere Behandlung in Polycarbonat eincompoundieren lassen, ohne dass es dabei zu signifikanten Abbauerscheinungen des Polycarbonates kommt. Diese Bedingung gilt für die vorliegende Erfindung als erfüllt, wenn es bei einer Eincompoundierung der anorganischen Teilchen auf Basis von Siliziumdioxid in einer Menge von 5 Gewichts-% in Polycarbonat zu einer Zunahme des MVR nach ISO 1133 von nicht mehr als 100 $cm^3$/10min kommt.

Die Herstellung der anorganischen Teilchen auf Basis von Siliziumdioxid ist prinzipiell in Hollemann-Wiberg (101. Auflage) oder im Römpp Lexikon Chemie - Version 2.0, Stuttgart/New York, Georg Thieme Verlag 1999, beschrieben.

Sie können synthetisch aus dem Rohstoff Sand gewonnen werden und werden auch als amorphe Kieselsäuren bezeichnet. Dabei wird in einem ersten Schritt Quarzsand und Alkalicarbonat bei etwa 1300°C zusammengeschmolzen. Die so erhaltenen Alkalisilicate werden anschließend bei hoher Temperatur und hohem Druck in überhitztem Wasser (z.B. bei 150°C und 5 bar Druck) in Lösung gebracht. Aus dieser wässrigen Alkalisilicat-Lösung können anschließend durch Fällung mit Mineralsäuren die beschriebenen amorphen Kieselsäuren hergestellt werden. Dabei bilden sich zunächst kolloidale Primärteilchen, die mit fortschreitender Reaktion agglomerieren und schließlich zu Aggregaten verwachsen. Wichtig bei den nach diesem Herstellprozess (Nassverfahren) gewonnenen Siliziumdioxid-Teilchen ist, dass bei der Bildung der Siliziumdioxid Teilchen eine möglichst geringe Menge an alkalischer Einschlüsse in den Teilchen vorliegen. Dies zeigt sich zum einen in wässriger Suspension, bei der der pH-Wert Messung dieser Siliziumdioxid-Suspensionen von 5 bis 9, bevorzugt von 6 bis 8 liegt, und zum anderen durch das Verhalten dieser Teilchen in Polycarbonat selbst, wobei der Anstieg des MVR nach ISO 1133 nicht höher als 100 $cm^3$/10 min liegen darf.

Als zweites Verfahren zur Herstellung der beschriebenen anorganischen Teilchen auf Basis von Siliziumdioxid gibt es die pyrogene Erzeugung. Bei diesem Verfahren wird Siliziumtetrachlorid, das aus (Ferro)Silizium durch die Umsetzung mit Chlor gewonnen wird, in einer Knallgasflamme aus Wasserstoff und Sauerstoff zersetzt. Diese Teilchen besitzen durch ihre freien Silanol-Gruppen eine hohe Hydrophilie und können durch Umsetzung mit z.B. Chlorsilanen hydrophobisiert werden. Auch für die nach dem Pyrolyseverfahren gewonnenen Teilchen ist es erforderlich, dass keine größere Menge an alkalischen oder saueren Einschlüssen in den Teilchen vorhanden sein darf. Dies zeigt sich wiederum zum einen in wässriger Suspension, bei der der pH-Wert Messung dieser Siliziumdioxid-Suspensionen von 5 bis 9, bevorzugt von 6 bis 8 liegt, und zum anderen durch das Verhalten dieser Teilchen in Polycarbonat selbst, wobei der Anstieg des MVR nach ISO 1133 nicht höher als 100 $cm^3$/10 min liegen darf.

Die beschriebenen anorganischen Teilchen auf Basis von Siliziumdioxid sind **dadurch gekennzeichnet, dass** die Schüttdichte von 0,2 bis 1,2 g/mL und die gewichtsmittlere Partikelgröße von 2 bis 50 μm und besonders bevorzugt von 5 bis 20 μm beträgt. Die Reinheit der beschriebenen Teilchen liegt bei größer 90 % Siliziumdioxid-Gehalt, bevorzugt größer 95 % und besonders bevorzugt größer 99 %. Der Wassergehalt ist kleiner als 10 %, bevorzugt kleiner als 5 % und besonders bevorzugt kleiner als 2 %, bestimmt nach Karl Fischer (160°C). Die Form der Teilchen kann rund oder oval sein mit einem Verhältnis von Längs- zu Querdurchmesser von kleiner als 10.

Die Verträglichkeit der beschriebenen anorganischen Teilchen auf Basis von Siliziumdioxid mit Polycarbonat kann ferner weiter verbessert werden, wenn diese mit einem Silicon-Coating versehen werden. Die höhere Verträglichkeit mit Polycarbonat äußert sich in einem niedrigeren MVR der Mischung aus den gecoateten anorganischen Teilchen auf Basis von Siliziumdioxid mit Polycarbonat im Vergleich zu einer entsprechenden Mischung aus nicht gecoateten anorganischen Teilchen auf Basis von Siliziumdioxid. Als Silicon-Coating kann z.B. Polymethylhydrosiloxan verwendet werden, das mit gängigen Methoden auf die zuvor beschriebenen anorganischen Teilchen auf Basis von Siliziumdioxid aufgebracht werden kann.

Bei den erfindungsgemäß einzusetzenden polymeren Teilchen b) auf Acrylatbasis mit einer Kern-Schale-Morphologie handelt es sich beispielsweise und bevorzugt um solche, wie sie in EP-A 634 445 offenbart werden.

Die polymeren Teilchen b) haben einen Kern aus einem kautschukartigen Vinylpolymeren. Das kautschukartige Vinylpolymere kann ein Homo- oder Copolymeres von einem beliebigen der Monomeren sein, die wenigstens eine ethylenartig ungesättigte Gruppe besitzen und die dem Fachmann auf dem Gebiet bekanntermaßen Additionspolymerisation unter den Bedingungen der Emulsionspolymerisation in einem wässrigen Medium eingehen. Solche Monomere sind in US 4 226 752, Spalte 3, Zeilen 40 - 62, aufgelistet.

Das kautschukartige Vinylpolymere enthält bevorzugt wenigstens 15 %, mehr bevorzugt wenigstens 25 %, am meisten bevorzugt wenigstens 40 % eines polymerisierten Acrylates, Methacrylates, Monovinylarens oder wahlweise substituierten Butadiens und von 0 bis 85 %, mehr bevorzugt von 0 bis 75 %, am meisten bevorzugt von 0 bis 60 % von einem oder mehreren copolymerisierten Vinylmonomeren, bezogen auf das Gesamtgewicht des kautschukartigen Vinylpolymeren.

Bevorzugte Acrylate und Methacrylate sind Alkylacrylate oder Allcylmethacrylate, welche bevorzugt 1 bis 18, besonders bevorzugt 1 bis 8, am meisten bevorzugt 2 bis 8 Kohlenstoffatome in der Alkylgruppe enthalten, wie Methyl-, Ethyl-, n-Propyl-, Isopropyl-, n-Butyl-, sec.-Butyl- oder tert.-Butyl- oder Hexyl-, Heptyl- oder Octylgruppen. Die Alkylgruppe kann verzweigt oder linear sein. Die bevorzugten Alkylacrylate sind Ethylacrylat, n-Butylacrylat, Isobutylacrylat oder 2-Ethylhexylacrylat. Das am meisten bevorzugte Alkylacrylat ist Butylacrylat.

Andere geeignete Acrylate sind beispielsweise 1,6-Hexandioldiacrylat, Ethylthioethylmethacrylat, Isobornylacrylat, 2-Hydroxyethylacrylat, 2-Phenoxyethylacrylat, Glycidylacrylat, Neopentylglycoldiacrylat, 2-Ethoxyethylacrylat, t-Butylaminoethylmethacrylat, 2-Methoxyethylacrylat, Glycidylmethacrylat oder Benzylmethacrylat.

Bevorzugte Monovinylarene sind Styrol oder $\alpha$-Methylstyrol, wahlweise substituiert am aromatischen Ring mit einer Alkylgruppe, wie Methyl, Ethyl oder tertiärem Butyl oder mit einem Halogen, wie Chlorstyrol.

Falls substituiert trägt das Butadien bevorzugt ein oder mehrere Alkylgruppen, welche 1 bis 6 Kohlenstoffatome enthalten, oder mit einem oder mehreren Halogenen, am meisten bevorzugt ist das Butadien mit einer oder mehreren Methylgruppen und/oder einem oder mehreren Chloratomen substituiert. Bevorzugte substituierte Butadiene sind 1,3-Butadien, Isopren, Chlorbutadien oder 2,3-Dimethyl-1,3-butadien.

Das kautschukartige Vinylpolymere kann eine oder mehrere (co)polymerisierte Acrylate, Methacrylate, Monovinylarene und/oder wahlweise substituierte Butadiene enthalten. Diese Monomere können copolymerisiert sein mit einem oder mehreren anderen copolymerisierbaren Vinylpolymeren, wie Diacetonacrylamid, Vinylnaphthalin, 4-Vinylbenzylalkohol, Vinylbenzoat, Vinylpropionat, Vinylcaproat, Vinylchlorid, Vinyloleat, Dimethylmaleat, Maleinsäureanhydrid, Dimethylfumarat, Vinylsulfonsäure, Vinylsulfonamid, Methylvinylsulfonat, N-Vinylpyrrolidon, Vinylpyridin, Divinylbenzol, Vinylacetat, Vinylversatat, Acrylsäure, Methacrylsaäure, N-Methylmethacrylamid, Acrylnitril, Methacrylnitril, Acrylamid oder N-(Isobutoxymethyl)-acrylamid.

Eines oder mehrere der zuvor genannten Monomere sind wahlweise mit 0 bis 10 %, bevorzugt mit 0 bis 5 %, eines copolymerisierbaren, polyfunktionellen Vernetzers und/oder mit 0 bis 10 %, bevorzugt mit 0 bis 5 %, eines copolymerisierbaren polyfunktionellen Pfropfvernetzers, bezogen auf das Gesamtgewicht des Kerns umgesetzt. Falls ein vernetzendes Monomeres verwendet wird, wird es bevorzugt mit einem Gehalt von 0,05 bis 5 %, mehr bevorzugt von 0,1 bis 1 %, bezogen auf das Gesamtgewicht der Kernmonomere, verwendet. Vernetzende Monomere sind auf dem Fachgebiet wohlbekannt und im Allgemeinen haben sie eine polyethylenartige Unsättigung, in welcher die ethylenartig ungesättigten Gruppen annähernd gleiche Reaktivität besitzen, wie Divinylbenzol, Trivinylbenzol, 1,3- oder 1,4-Triolacrylate oder -methacrylate, Glycol-di- oder -trimethacrylate oder -acrylate, wie Ethylenglycoldimethacrylat oder -diacrylat, Propylenglycoldimethacrylat oder -diacrylat, 1,3- oder 1,4-Butylenglycoldimethacrylat oder, am meisten bevorzugt, 1,3- oder 1,4-Butylenglycoldiacrylat. Falls ein pfropfvernetzendes Monomeres verwendet wird, wird es bevorzugt mit einem Gehalt von 0,1 bis 5 %, mehr bevorzugt von 0,5 bis 2,5 %, bezogen auf das Gesamtgewicht der Kernmonomere, verwendet. Pfropfvernetzende Monomere sind auf dem Fachgebiet wohlbekannt, und im Allgemeinen sind es polyethylenartig ungesättigte Monomere, welche ausreichend niedrige Reaktivität der ungesättigten Gruppe besitzen, damit signifikante zurückbleibende Unsättigung möglich wird, die in dem Kern im Anschluss an seine Polymerisation verbleibt. Bevorzugte Pfropfvernetzer sind copolymerisierbare Allyl-, Methallyl- oder Crotylester von $\alpha,\beta$-ethylenartig ungesättigten Carbonsäuren oder Dicarbonsäuren, wie Allylmethacrylat, Allylacrylat, Diallylmaleat und Allylacryloxypropionat, am meisten bevorzugt Allylmethacrylat.

Am meisten bevorzugt enthalten die polymeren Teilchen b) einen Kern aus kautschukartigem Alkylacrylatpolymeren, wobei die Alkylgruppe von 2 bis 8 Kohlenstoffatome aufweist, wahlweise copolymerisiert mit von 0 bis 5 % Vernetzer und von 0 bis 5 % Pfropfvernetzer, bezogen auf das Gesamtgewicht des Kerns. Das kautschukartige Alkylacrylat ist bevorzugt mit bis zu 50 % von einem oder mehreren copolymerisierbaren Vinylmonomeren copolymerisiert, beispielsweise den zuvor genannten. Geeignete vernetzende und pfropfvernetzende Monomere sind dem Fachmann auf dem Gebiet wohlbekannt, und es sind bevorzugt solche, wie sie in EP-A 0 269 324 beschrieben sind.

Der Kern der polymeren Teilchen b) kann rückständiges oligomeres Material enthalten, das bei dem Polymerisationsverfahren eingesetzt wurde, um die Polymerteilchen zu quellen, jedoch hat ein solches oligomeres Material ein ausreichendes Molekulargewicht, um seine Diffusion zu verhindern, oder um zu verhindern, dass es während des Verarbeitens oder der Benutzung extrahiert wird.

Die polymeren Teilchen b) enthalten eine oder mehrere Schalen. Diese eine Schale oder diese mehrere Schalen sind bevorzugt aus einem Vinylhomo- oder -copolymeren hergestellt. Geeignete Monomere zur Herstellung der Schale (n) sind im US-Patent No. 4 226 752, Spalte 4, Zeilen 20 - 46, aufgeführt, wobei auf die Angaben hierüber Bezug genommen wird. Eine Schale oder mehrere Schalen sind bevorzugt ein Polymeres aus einem Methacrylat, Acrylat, Vinylaren, Vinylcarboxylat, Acrylsäure und/oder Methacrylsäure.

Bevorzugte Acrylate und Methacrylate sind Alkylacrylate oder Alkylmethacrylate, welche bevorzugt 1 bis 18, mehr bevorzugt 1 bis 8, am meisten bevorzugt 2 bis 8 Kohlenstoffatome in der Alkylgruppe enthalten, wie Methyl-, Ethyl-, n-Propyl-, Isopropyl-, n-Butyl-, Isobutyl- oder tert.-Butyl-, 2-Ethylhexyl- oder die Hexyl-, Heptyl- oder Octylgruppen. Die Alkylgruppe kann verzweigt oder linear sein. Das bevorzugte Alkylacrylat ist Ethylacrylat. Andere brauchbare Acrylate und Methacrylate sind solche, welche zuvor für den Kern angegeben wurden, bevorzugt das 3-Hydroxypropylmethacrylat.

Das am meisten bevorzugte Alkylmethacrylat ist Methylmethacrylat.

Bevorzugte Vinylarene sind Styrol oder $\alpha$-Methylstyrol, wahlweise substituiert am aromatischen Ring mit einer Alkylgruppe, wie Methyl, Ethyl oder tert.-Butyl oder mit einem Halogen, wie Chlorstyrol.

Ein bevorzugtes Vinylcarboxylat ist Vinylacetat.

Die Schale(n) enthält/enthalten bevorzugt wenigstens 15 %, mehr bevorzugt wenigstens 25 %, am meisten bevorzugt wenigstens 40 % eines polymerisierten Methacrylates, Acrylates oder Monovinylarens und 0 bis 85 %, mehr bevorzugt 0 bis 75 %, am meisten bevorzugt 0 bis 60 % von einem oder mehreren Vinylcomonomeren, wie anderen Alkylmethacrylaten, Arylmethacrylaten, Alkylacrylaten, Arylacrylaten, Alkyl- und Arylacrylamiden, Acrylnitril, Methacrylnitril, Maleinimid und/oder Alkyl- und Arylacrylaten und -methacrylaten, welche mit einem oder mehreren Substituenten, wie Halogen, Alkoxy, Alkylthio, Cyanoalkyl oder Amino substituiert sind. Beispiele von geeigneten Vinylcomonomeren sind zuvor angegeben. Zwei oder mehr Monomere können copolymerisiert sein.

Das Schalenpolymere kann einen Vernetzer und/oder einen Pfropfvernetzer des Typs, wie er zuvor unter Bezugnahme auf das Kernpolymer angegeben wurde, enthalten.

Die Schalenpolymere machen bevorzugt von 5 bis 40 %, mehr bevorzugt von 15 bis 35 % des Gesamtteilchengewichtes aus.

Die polymeren Teilchen b) enthalten wenigstens 15 %, bevorzugt von 20 bis 80 %, mehr bevorzugt von 25 bis 60 %, am meisten bevorzugt von 30 bis 50 % eines polymerisierten Alkylacrylates oder -methacrylates, bezogen auf das Gesamtgewicht des Polymeren. Bevorzugte Alkylacrylate und -methacrylate sind zuvor angegeben. Der Alkylacrylat- oder Alkylmethacrylatbestandteil kann in dem Kern und/oder in der Schale(n) der polymeren Teilchen b) vorhanden sein. Homopolymere eines Alkylacrylates oder -methacrylates in dem Kern und/oder der Schale(n) sind brauchbar, jedoch ist ein Alkyl(meth)acrylat bevorzugt mit einem oder mehreren anderen Typen von Alkyl-(meth)acrylaten und/oder einem oder mehreren anderen Vinylpolymeren copolymerisiert, bevorzugt mit den oben aufgelisteten. Am meisten bevorzugt enthalten die polymeren Teilchen b) einen Kern aus einem Poly-(butylacrylat) und eine Schale oder mehrere Schalen aus Poly(methylmethacrylat).

Die polymeren Teilchen b) sind nützlich, um den thermoplastischen Polymeren Lichtstreueigenschaften zu erteilen. Der Brechungsindex n von Kern und der Schale(n) der polymeren Teilchen b) liegt bevorzugt innerhalb von +/- 0,25 Einheiten, mehr bevorzugt innerhalb +/-0,18 Einheiten, am meisten bevorzugt innerhalb +/-0,12 Einheiten des Brechungsindexes des thermoplastischen Polymeren. Der Brechungsindex n des Kerns und der Schale(n) liegt bevorzugt nicht näher als +/- 0,003 Einheiten, mehr bevorzugt nicht näher als +/-0,01 Einheiten, am meisten bevorzugt nicht näher als +/-0,05 Einheiten bei dem Brechungsindex des thermoplastischen Polymeren. Der Brechungsindex wird entsprechend der Norm ASTM D 542-50 und/oder DIN 53 400 gemessen.

Die polymeren Teilchen b) haben im Allgemeinen einen Durchschnittsteilchendurchmesser von wenigstens 0,5 Mikrometer, bevorzugt von wenigstens 2 Mikrometer, mehr bevorzugt von 2 bis 50 Mikrometer, am meisten bevorzugt von 2 bis 15 Mikrometer. Unter "Durchschnittsteilchendurchmesser" ist der Zahlendurchschnitt zu verstehen. Bevorzugt haben wenigstens 90 %, am meisten bevorzugt wenigstens 95 % der polymeren Teilchen b) einen Durchmesser von mehr als 2 Mikrometer. Die polymeren Teilchen b) sind bevorzugt ein freifließendes Pulver.

Die polymeren Teilchen b) können in bekannter Weise hergestellt werden. Im Allgemeinen wird wenigstens eine Monomerenkomponente des Kernpolymeren der Emulsionspolymerisation unter Bildung von Emulsionspolymerteilchen unterworfen. Die Emulsionspolymerteilchen werden mit derselben oder einer oder mehreren anderen Monomerenkomponenten des Kernpolymeren gequollen, und das/die Monomere werden innerhalb der Emulsionspolymerteilchen polymerisiert. Die Stufen des Quellens und Polymerisierens können wiederholt werden, bis die Teilchen auf die gewünschte Kerngröße angewachsen sind. Die Kernpolymerteilchen werden in einer zweiten wässrigen Monomerenemulsion suspendiert, und es wird ein Polymermantel aus dem/den Monomeren auf die Polymerteilchen in der zweiten Emulsion polymerisiert. Eine Schale oder mehrere Schalen können auf dem Kernpolymeren polymerisiert werden. Die Herstellung von Kern/Schalenpolymerteilchen ist in EP-A 0 269 324 und in den US-Patenten 3,793,402 und 3,808,180 beschrieben.

Die einen weiteren Gegenstand der Erfindung vorliegenden Formkörper aus der erfmdungsgemäßen Zusammensetzung können entweder durch Spritzguss oder durch Extrusion hergestellt werden. Wenn es sich hierbei um großflächige Massivplatten handelt kann die Erzeugung durch Spritzguss aus technischen Gründen nicht wirtschaftlich erfolgen. In diesen Fällen ist das Extrusionsverfahren zu bevorzugen. Zur Extrusion wird ein Polycarbonat-Granulat dem Extruder zugeführt und im Plastifizierungssystem des Extruders aufgeschmolzen. Die Kunststoffschmelze wird durch eine Breitschlitzdüse gedrückt und dabei verformt, im Walzenspalt eines Glättkalanders in die gewünschte endgültige Form gebracht und durch wechselseitige Kühlung auf Glättwalzen und der Umgebungsluft formfixiert. Die zur Extrusion verwendeten Polycarbonate mit hoher Schmelzeviskosität werden üblicherweise bei Schmelzetemperaturen von 260 bis 320 °C verarbeitet, entsprechend werden die Zylindertemperaturen des Plastifizierzylinders sowie Düsentemperaturen eingestellt.

Durch Einsatz von einem oder mehrerer Seitenextruder und geeigneten Schmelzeadaptern vor der Breitschlitzdüse lassen sich Polycarbonatschmelzen verschiedener Zusammensetzung übereinander legen und somit mehrschichtige Massivplatten erzeugen (siehe beispielsweise EP-A 0 110 221 und EP-A 0 110 238).

Sowohl die Basisschicht als auch die gegebenenfalls vorhandene(n) Coextrusionsschicht(en) der erfindungsgemäßen Formkörper können zusätzlich Additive wie beispielsweise, UV-Absorber sowie andere übliche Verarbeitungshilfsmittel insbesondere Entformungsmittel und Fließmittel sowie die für Polycarbonate üblichen Stabilisatoren insbesondere Thermostabilisatoren sowie Antistatika, Farbmittel, optische Aufheller und anorganische Pigmente enthalten. In jeder Schicht können dabei unterschiedliche Additive bzw. Konzentrationen von Additiven vorhanden sein.

Insbesondere kann die Coextrusionsschicht UV-Absorber und Entformungsmittel enthalten.

Geeignete Stabilisatoren sind beispielsweise Phosphine, Phosphite oder Si enthaltende Stabilisatoren und weitere in EP-A 0 500 496 beschriebene Verbindungen. Beispielhaft seien Triphenylphosphite, Diphenylalkylphosphite, Phenyldialkylphosphite, Tris-(nonylphenyl)phosphit, Tetrakis-(2,4-di-tert.-butylphenyl)-4,4'-biphenylen-diphosphonit, Bis(2,4-dicumylphenyl)petaerythritoldiphosphit und Triarylphosphit genannt. Besonders bevorzugt sind Triphenylphosphin und Tris-(2,4-di-tert.-butylphenyl)phosphit.

Geeignete Entformungsmittel sind beispielsweise die Ester oder Teilester von ein- bis sechswertigen Alkohole, insbesondere des Glycerins, des Pentaerythrits oder von Guerbetalkoholen.

Einwertige Alkohole sind beispielsweise Stearylalkohol, Palmitylalkohol und Guerbetalkohole, ein zweiwertiger Alkohol ist beispielsweise Glycol, ein dreiwertiger Alkohol ist beispielsweise Gylcerin, vierwertige Alkohole sind beispielsweise Pentaerythrit und Mesoerythrit, fünfwertige Alkohole sind beispielsweise Arabit, Ribit und Xylit, sechswertige Alkohole sind beispielsweise Mannit, Glucit (Sorbit) und Dulcit.

Die Ester sind bevorzugt die Monoester, Diester, Triester, Tetraester, Pentaester und Hexaester oder deren Mischungen, insbesondere statistische Mischungen, aus gesättigten, aliphatischen $C_{10}$ bis $C_{36}$-Monocarbonsäuren und gegebenenfalls Hydroxy-Monocarbonsäuren, vorzugsweise mit gesättigten, aliphatischen $C_{14}$ bis $C_{32}$-Monocarbonsäuren und gegebenenfalls Hydroxy-Monocarbonsäuren.

Die kommerziell erhältlichen Fettsäureester, insbesondere des Pentaerythrits und des Glycerins, können herstellungsbedingt <60% unterschiedlicher Teilester enthalten.

Gesättigte, aliphatische Monocarbonsäuren mit 10 bis 36 C-Atomen sind beispielsweise Caprinsäure, Laurinsäure, Myristinsäure, Palmitinsäure, Stearinsäure, Hydroxystearinsäure, Arachinsäure, Behensäure, Lignocerinsäure, Cerotinsäure und Montansäuren.

Bevorzugte gesättigte, aliphatische Monocarbonsäuren mit 14 bis 22 C-Atomen sind beispielsweise Myristinsäure, Palmitinsäure, Stearinsäure, Hydroxystearinsäure, Arachinsäure und Behensäure.

Besonders bevorzugt sind gesättigte, aliphatische Monocarbonsäuren wie Palmitinsäure, Stearinsäure und Hydroxystearinsäure.

Die gesättigten, aliphatischen $C_{10}$ bis $C_{36}$-Carbonsäuren und die Fettsäureester sind als solche entweder literaturbekannt oder nach literaturbekannten Verfahren herstellbar. Beispiele für Pentaerythritfettsäureester sind die der besonders bevorzugten, vorstehend genannten Monocarbonsäuren.

Besonders bevorzugt sind Ester des Pentaerythrits und des Glycerins mit Stearinsäure und Palmitinsäure.

Besonders bevorzugt sind auch Ester von Guerbetalkoholen und des Glycerins mit Stearinsäure und Palmitinsäure und gegebenenfalls Hydroxystearinsäwe.

Beispiele für geeignete Antistatika sind kationaktive Verbindungen, beispielsweise quartäre Ammonium-, Phosphonium- oder Sulfoniumsalze, anionaktive Verbindungen, beispielsweise Alkylsulfonate, Alkylsulfate, Alkylphosphate, Carboxylate in Form von Alkali- oder Erdalkalimetallsalzen, nichtionogene Verbindungen, beispielsweise Polyethylenglykolester, Polyethylenglykolether, Fettsäureester, ethoxylierte Fettamine. Bevorzugte Antistatika sind nichtionogene Verbindungen.

Geeignete UV-Absorber sind beispielsweise

a) Benzotriazol-Derivate nach Formel (I):

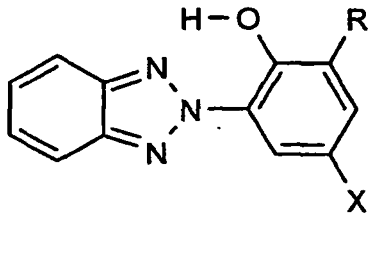

Formel (I)

In Formel (I) sind R und X gleich oder verschieden und bedeuten H oder Alkyl oder Alkylaryl.
Bevorzugt ist dabei Tinuvin 329 mit X = 1,1,3,3-Tetramethylbutyl und R = H
Tinuvin 350 mit X = tert-Butyl und R = 2-Butyl
Tinuvin 234 mit X = R = 1,1-Dimethyl-l-phenyl

b) Dimere Benzotriazol-Derivate nach Formel (II):

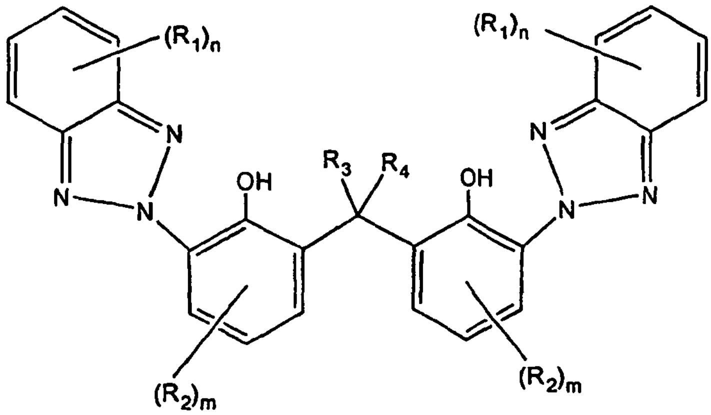

Formel (II)

In Formel (II) sind $R^1$ und $R^2$ gleich oder verschieden und bedeuten H, Halogen, $C_1$-$C_{10}$-Alkyl, $C_5$-$C_{10}$-Cycloalkyl, $C_7$-$C_{13}$-Aralkyl, $C_6$-$C_{14}$-Aryl, -$OR^5$ oder -(CO)-O-$R^5$ mit $R^5$ = H oder $C_1$-$C_4$-Alkyl.
In Formel (II)sind $R^3$ und $R^4$ ebenfalls gleich oder verschieden und bedeuten H, $C_1$-$C_4$-Alkyl, $C_5$-$C_6$-Cycloalkyl, Benzyl oder $C_6$-$C_{14}$-Aryl.
In Formel (II) bedeutet m 1,2 oder 3 und n 1,2,3 oder 4.
Bevorzugt ist dabei Tinuvin 360 mit $R^1$ = $R^3$ = $R^4$= H; n = 4; $R^2$ =1,1,3,3-Tetramethylbutyl; m = 1

b1) Dimere Benzotriazol-Derivate nach Formel (III):

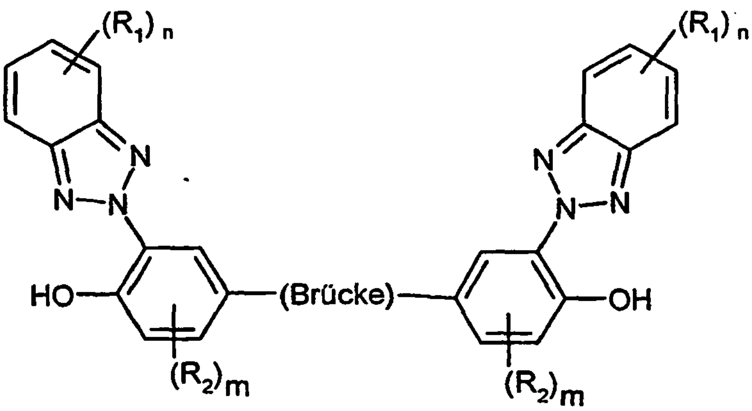

Formel (III)

worin die Brücke

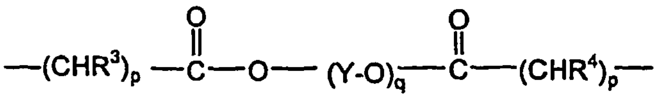

bedeutet,
$R^1$, $R^2$, m und n die für Formel (II) genannte Bedeutung haben,
und worin p eine ganze Zahl von 0 bis 3 ist,
q eine ganze Zahl von 1 bis 10 ist,
Y gleich $-CH_2-CH_2-$, $-(CH_2)_3-$, $-(CH_2)_4-$, $-(CH_2)_5-$, $-(CH_2)_6-$, oder $CH(CH_3)-CH_2$-ist und
$R^3$ und $R^4$ die für Formel (II) genannte Bedeutung haben.

Bevorzugt ist dabei Tinuvin 840 mit $R^1$ = H; n = 4; $R^2$ = tert-Butyl; m = 1; $R^2$ ist in ortho-Stellung zur OH-Gruppe angebracht; $R^3 = R^4$ = H; p = 2; Y = $-(CH_2)_5-$; q = 1

c) Triazin-Derivate nach Formel (IV):

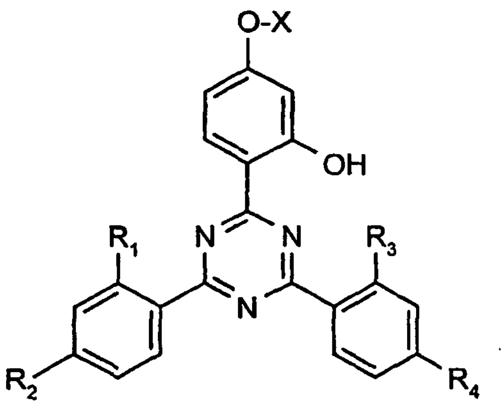

Formel (IV)

worin $R^1$, $R^2$, $R^3$, $R^4$ in Formel (IV) gleich oder verschieden sind und H oder Alkyl oder CN oder Halogen sind und X gleich Alkyl ist.
Bevorzugt ist dabei Tinuvin 1577 mit $R^1 = R^2 = R^3 = R^4$ = H; X = Hexyl sowie
Cyasorb UV-1164 mit $R^1 = R^2 = R^3 = R^4$ = Methyl; X = Octyl

d) Triazin-Derivate der folgenden Formel (IVa)

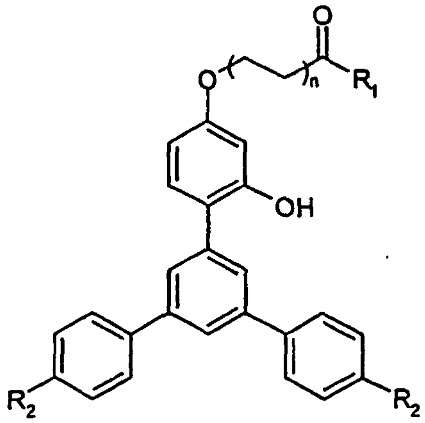

Formel (IVa)

worin
$R^1$ gleich $C_1$-Alkyl bis $C_{17}$-Alkyl bedeutet,
$R^2$ gleich H oder $C_1$-Alkyl bis $C_4$-Alkyl bedeutet und
n gleich 0 bis 20 ist.

e) Dimere Triazin-Derivate der Formel (V):

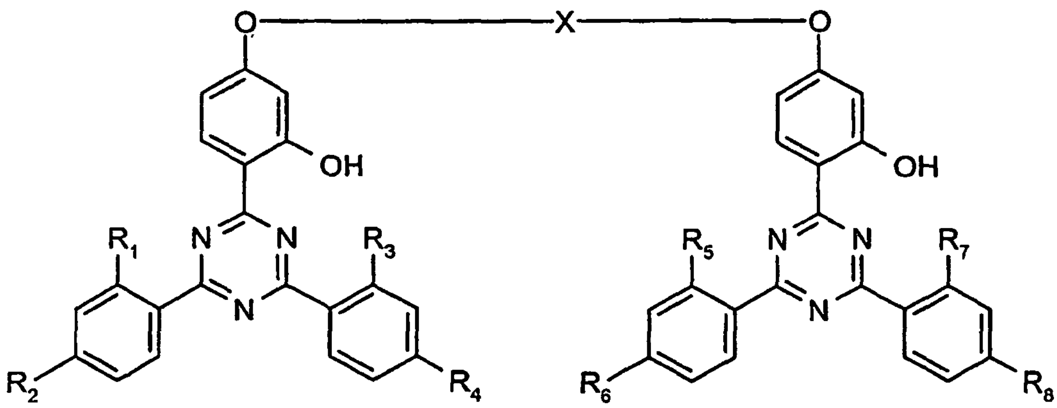

Formel (V)

worin
$R^1$, $R^2$, $R^3$, $R^4$, $R^5$, $R^6$, $R^7$, $R^8$ in Formel (V) gleich oder verschieden sein können und H oder Alkyl oder CN oder Halogen bedeuten und
X gleich Alkyl oder $-(CH_2CH_2-O-)n-C(=O)-$ ist.

f) Diarylcyanoacrylate der Formel (VI):

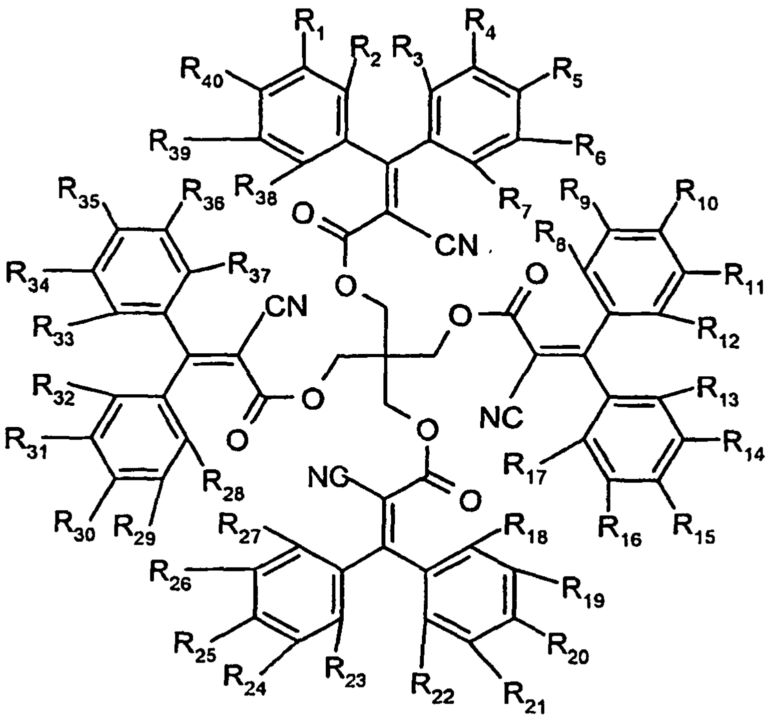

Formel (VI)

worin $R^1$ bis $R^{40}$ gleich oder verschieden sein können und H, Alkyl, CN oder Halogen bedeuten.

Bevorzugt ist dabei Uvinul 3030 mit $R^1$ bis $R^{40}$ = H

Die oben genannten UV-Absorber sind dem Fachmann bekannt und zum Teil kommerziell erhältlich.

## Beispiele

MVR-Messung eines Compounds aus 95 % Makrolon 3108 550115 der Fa. Bayer MaterialScience und 5 % Sylobloc 41 der Fa. Grace zur Feststellung des Polycarbonat-Abbaus.

Der genannte Compound weist einen MVR (ISO 1133) bei 300 °C von 38 $cm^3$/10 min auf gegenüber einem MVR von reinem Makrolon 3108 550115, der bei 6 $cm^3$/10 min liegt.

### Beispiel 1

Es wurde ein Compound folgender Zusammensetzung hergestellt:

- Polycarbonat Makrolon 3108 550115 der Fa. Bayer MaterialScience mit einem Anteil von 99 w-%
- Kern-Schale-Teilchen mit einem Butadien/Styrol-Kern und einer Methylmethacrylat-Schale Paraloid EXL 5137 der Fa. Rohm & Haas mit einer Teilchengröße von 2 bis 15 μm und einer mittleren Teichengröße von 8 μm mit einem Anteil von 1 w-%

### Beispiel 2

Es wurde ein Compound folgender Zusammensetzung hergestellt:

- Polycarbonat Makrolon 3108 550115 der Fa. Bayer MaterialScience mit einem Anteil von 99 w-%
- Amorphe Kieselsäure Sylobloc 41 der Fa. Grace mit einer Teilchengröße von 7,5 bis 11,6 μm mit einem Anteil von 1 w-%

**Beispiel 3**

Es wurde ein Compound folgender Zusammensetzung hergestellt:

- Polycarbonat Makrolon 3108 550115 der Fa. Bayer MaterialScience mit einem Anteil von 98 w-%
- Kern-Schale-Teilchen mit einem Butadien/Styrol-Kern und einer Methylmethacrylat-Schale Paraloid EXL 5137 der Fa. Rohm & Haas mit einer Teilchengröße von 2 bis 15 μm und einer mittleren Teichengröße von 8 μm mit einem Anteil von 2 w-%

**Beispiel 4**

Es wurde ein Compound folgender Zusammensetzung hergestellt:

- Polycarbonat Makrolon 3108 550115 der Fa. Bayer MaterialScience mit einem Anteil von 98 w-%
- Amorphe Kieselsäure Sylobloc 41 der Fa. Grace mit einer Teilchengröße von 7,5 bis 11,6 μm mit einem Anteil von 2 w-%

**Beispiel 5**

Es wurde ein Compound folgender Zusammensetzung hergestellt:

- Polycarbonat Makrolon 3108 550115 der Fa. Bayer MaterialScience mit einem Anteil von 99 w-%
- Kern-Schale-Teilchen mit einem Butadien/Styrol-Kern und einer Methylmethacrylat-Schale Paraloid EXL 5137 der Fa. Rohm & Haas mit einer Teilchengröße von 2 bis 15 μm und einer mittleren Teichengröße von 8 μm mit einem Anteil von 0,5 w-%
- Amorphe Kieselsäure Sylobloc 41 der Fa. Grace mit einer Teilchengröße von 7,5 bis 11,6 μm mit einem Anteil von 0,5 w-%

**Beispiel 6**

Es wurde ein Compound folgender Zusammensetzung hergestellt:

- Polycarbonat Makrolon 3108 550115 der Fa. Bayer MaterialScience mit einem Anteil von 98 w-%
- Kern-Schale-Teilchen mit einem Butadien/Styrol-Kern und einer Methylmethacrylat-Schale Paraloid EXL 5137 der Fa. Rohm & Haas mit einer Teilchengröße von 2 bis 15 μm und einer mittleren Teichengröße von 8 μm mit einem Anteil von 1 w-%
- Amorphe Kieselsäure Sylobloc 41 der Fa. Grace mit einer Teilchengröße von 7,5 bis 11,6 μm mit einem Anteil von 1 w-%

Die unter den Beispielen 1 bis 6 angegebenen Mischungen wurden mit gängigen Verfahren compoundiert und anschließend zu 4 mm dicken Farbmusterplättchen im Spritzgussverfahren verarbeitet. Die optischen Daten, wurden gemäß ASTM D1003, ASTM E313 und DIN 5036 bestimmt. Die entsprechenden optischen Werte sind in Tabelle 1 dargestellt.

Auffallend ist hierbei, dass das Lichtstreuvermögen der erfindungsgemäßen Beispiele 5 und 6, die jeweils eine Kombination aus polymeren Partikeln auf Vinyl-Acrylat-Basis mit einer Kern/Schale Morphologie und amorpher Kieselsäure enthalten, nicht etwa, wie es zu erwarten wäre, zwischen den Werten für Zusammensetzungen, die jeweils nur entweder amorphe Kieselsäure oder polymeren Partikel enthalten, liegt, sondern jeweils eine nahezu gleiche Lichtstreukurve aufweisen wie eine Zusammensetzung, die eine deutlich größere Menge polymere Partikel auf Vinyl-Acrylat-Basis mit einer Kern/Schale Morphologie enthalten. So liegt der Halbwertswinkel der Probe aus Beispiel 1 mit 1 % polymeren Partikeln auf Vinyl-Acrylat-Basis mit einer Kern/Schale, Morphologie bei 51°, das heißt bei einer Auslenkung von 51° aus der Geradeausrichtung hat die Lichtintensität auf 50 % der Lichtintensität in Geradeausrichtung abgenommen. Im Beispiel 2 beträgt der Halbwertswinkel nur 26°. Im Beispiel 5 liegt der Halbwertswinkel mit 49° jedoch auf annähernd gleicher Höhe wie im Beispiel 1.

Besonders hervorzuheben ist jedoch die Lichttransmission, die im Beispiel 5 mit 41,9 % deutlich höher liegt als im Beispiel 1 mit 37,2 %. Als weitere Größe, um die Lichtstreuung zu beschreiben, lässt sie aus den Kurven das Streuvermögen nach DIN 5036 ableiten. Es berechnet sich nach folgender Formel:

$$\text{Streuvermögen [\%]} = \frac{(\text{Lichtintensität bei } 20°) \cdot (\text{Lichtintensität bei } 70°)}{2 \cdot (\text{Lichtintensität bei } 5°)}$$

Hierbei zeigt sich ebenfalls deutlich, dass das Streuvermögen der Beispiele 1 und 5 mit 55 % überraschenderweise auf gleichem Niveau liegt.

Ähnliches gilt für die Beispiele 3, 4 und 6. Auch hierbei liegt die Lichttransmission in Beispiel 6, bei dem jeweils 1 % polymere Partikel auf Vinyl-Acrylat-Basis mit einer Kern/Schale Morphologie und amorphe Kieselsäure kombiniert sind mit 32,6 % ebenfalls deutlich höher als im Beispiel 3 mit einer Lichttransmission von 31,2 %, bei dem ausschließlich 2 % polymere Partikeln auf Vinyl-Acrylat-Basis mit einer Kern/Schale Morphologie verwendet wurden. Der Halbwertswinkel liegt mit 61° im Beispiel 6 sogar geringfügig über dem Halbwertswinkel des Beispiels 3 mit 60°. Nach deutlicher wird der Unterschied im Streuvermögen, das im Beispiel 6 mit 65 % deutlich über dem des Beispiels 3 mit 62 % liegt.

**Tabelle 1: Optische Daten der Farbmusterplättchen aus den Compounds nach den Beispielen 1 bis 6 (4 mm Schichtdicke)**

| Messgröße | Norm | Beispiel 1 | Beispiel 2 | Beispiel 5 | Beispiel 3 | Beispiel 4 | Beispiel 6 |
|---|---|---|---|---|---|---|---|
| **Lichttransmission [%](C2°)** | **ASTM D1003** | 37,2 | 63,4 | 41,9 | 31,2 | 47,7 | 32,6 |
| **Yellowness Index (C2°)** | **ASTM E313** | 8,2 | 13,9 | 13,2 | 4,2 | 19,1 | 10,4 |
| **Reflexion [%](C2°)** | **DIN 5036** | 22,7 | 12,8 | 19,4 | 32,1 | 16,5 | 26,8 |
| **Haze[%]** | **ASTM D1003** | 100 | 100 | 100 | 100 | 100 | 100 |
| **Hafbwertswinkel [°]** | **DIN 5036** | 52 | 26 | 49 | 60 | 41 | 61 |
| **Lichtintensität bei 5° [%]** | **DIN 5036** | 98,0 | 96,0 | 99,0 | 98,0 | 98,0 | 98,0 |
| **Lichtintensität bei 20° [%]** | **DIN 5036** | 87,0 | 58,0 | 87,0 | 93,0 | 80,0 | 93,0 |
| **Lichtintensitätbei 70° [%]** | **DIN 5036** | 21,0 | 4,0 | 22,0 | 28,0 | 12,0 | 34,0 |
| **Streuvermögen [%]** | **DIN 5036** | 55 | 32 | 55 | 62 | 47 | 65 |

**Patentansprüche**

1. Lichtstreuende Zusammensetzung enthaltend 60 bis 99.98 Gewichts-% aromatisches Polycarbonat 0,01 bis 20 Gewichts-% anorganischen Teilchen auf Basis von Siliziumdioxid mit einer gewichtsmittleren Teilchengröße von 2-50 µm 0,01 bis 20 Gewichts-% polymerer Teilchen auf Acrylatbasis mit einer Kem-Schale-Morphologie, wobei diese polymeren Teilchen eine mittlere Teilchengröße von 1 bis 100 µm aufweisen.

2. Lichtstreuende Zusammensetzung gemäß Anspruch 1, wobei die anorganischen Teilchen auf Basis von Siliziumdioxid amorphe Kieselsäure, die in wässriger Suspension einen pH-Wert von 5 bis 9 aufweist, darstellen.

3. Lichtstreuende Zusammensetzung gemäß Anspruch 2, wobei die anorganischen Teilchen auf Basis von Siliziumdioxid amorphe Kieselsäure, die in wässriger Suspension einen pH-Wert von 5 bis 9 aufweist, darstellen, die bei einer Eincompoundierung der anorganischen Teilchen in einer Menge von 5 Gewichts-% in Polycarbonat zu einer Zunahme des MVR nach ISO 1133 von nicht mehr als 100 $cm^3$/10min führen.

4. Lichtstreuende Zusammensetzung gemäß Anspruch 3, wobei die amorphe Kieselsäure nicht beschichtet ist.

5. Verwendung von lichtstreuenden Zusammensetzungen nach einem der Anspruche 1 bis 4 zur Herstellung von Formkörpern.

6. Verfahren zur Herstellung von mehrschichtigen Formkörpern durch Coextrusion, wobei mindestens eine Schicht aus einer Zusammensetzung nach einem der Anspruchs 1 bis 4 besteht.

7. Formkörper erhältlich aus lichtstreuenden Zusammensetzungen nach einem der Ansprüche 1 bis 4.

8. Formkörper erhältlich nach dem Verfahren gemäß Anspruch 6, wobei mindestens eine Coextrusionsschicht mindestens einen UV-Absorber in einem Anteil von 0.1 bis 20 Gewichts-% bezogen auf die Coextrusionsschicht enthält.

9. Formkörper gemäß Anspruch 7 oder 8, wobei es sich bei dem Formkörper um eine Massivplatte handelt.

## Claims

1. Light-scattering composition comprising 60 to 99.98 % by weight of aromatic polycarbonate, 0.01 to 20 % by weight of inorganic particles based on silicon dioxide having a weight-average particle size of 2 - 50 μm and 0.01 to 20 % by weight of acrylate-based polymeric particles with a core-shell morphology, wherein these polymeric particles have an average particle size of from 1 to 100 μm.

2. Light-scattering composition according to claim 1,
wherein the inorganic particles based on silicon dioxide are made of amorphous silica which has a pH of from 5 to 9 in aqueous suspension.

3. Light-scattering composition according to claim 2,
wherein the inorganic particles based on silicon dioxide are made of amorphous silica which has a pH of from 5 to 9 in aqueous suspension and, when the inorganic particles are compounded into polycarbonate in an amount of 5 % by weight, they lead to an increase in the MVR according to ISO 1133 of not more than 100 $cm^3$/10 min.

4. Light-scattering composition according to claim 3,
wherein the amorphous silica is not coated.

5. Use of light-scattering compositions according to one of claims 1 to 4 for the production of shaped articles.

6. Process for the production of multilayered shaped articles by coextrusion, wherein at least one layer is made of a composition according to one of claims 1 to 4.

7. Shaped article obtainable from light-scattering compositions according to one of claims 1 to 4.

8. Shaped article obtainable by the process according to claim 6, wherein at least one coextruded layer contains at least one UV absorber in a content of from 0.1 to 20 % by weight, based on the coextruded layer.

9. Shaped article according to claim 7 or 8, wherein the shaped article is a solid sheet.

## Revendications

1. Composition diffusant la lumière contenant 60 à 99,98 % en poids de polycarbonate aromatique, 0,01 à 20 % en poids de particules inorganiques à base de dioxyde de silicium ayant une taille de particules moyenne en poids de 2-50 μm et 0,01 à 20 % en poids de particules polymères à base d'acrylate ayant une morphologie noyau-enveloppe, où ces particules polymères présentent une taille de particules moyenne de 1 à 100 μm.

2. Composition diffusant la lumière selon la revendication 1 où les particules inorganiques à base de dioxyde de silicium représentent de l'acide silicique amorphe qui présente en suspension aqueuse un pH de 5 à 9.

3. Composition diffusant la lumière selon la revendication 2, où les particules inorganiques à base de dioxyde de silicium représentent de l'acide silicique amorphe qui, en suspension aqueuse, présente un pH de 5 à 9, qui, lors

d'une incorporation des particules inorganiques en une quantité de 5 % en poids dans du polycarbonate, conduisent à une augmentation du MVR selon ISO 1133 ne dépassant pas 100 $cm^3$/10 min.

**4.** Composition diffusant la lumière selon la revendication 3, où l'acide silicique amorphe n'est pas revêtu.

**5.** Utilisation de compositions diffusant la lumière selon l'une des revendications 1 à 4 pour la production de corps mis en forme.

**6.** Procédé pour produire des corps mis en forme multicouches par co-extrusion où au moins une couche consiste en une composition selon l'une des revendications 1 à 4,

**7.** Corps mis en forme pouvant être obtenu à partir de compositions diffusant la lumière selon l'une des revendications 1 à 4.

**8.** Corps mis en forme pouvant être obtenu selon le procédé selon la revendication 6, où au moins une couche de co-extrusion contient au moins un absorbeur d'UV en une proportion de 0,1 à 20 % en poids par rapport à la couche de co-extrusion.

**9.** Corps mis en forme selon la revendication 7 ou 8, où le corps mis en forme est une plaque massive.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 634445 A
- DE 2251708 A
- US 20040066645 A
- DE 4238123 A
- US 4226752 A
- EP 0269324 A
- US 3793402 A
- US 3808180 A
- EP 0110221 A
- EP 0110238 A
- EP 0500496 A


### In der Beschreibung aufgeführte Nicht-Patentliteratur


- **Schnell.** Chemistry and Physics of Polycarbonats, Polymer Reviews. Interscience Publishers, 1964, vol. 9
- Synthesis of Poly(ester)carbonate Copolymers. **D.C. PREVORSEK ; B.T. DEBONA ; Y. KESTEN.** Journal of Polymer Science, Polymer Chemistry. Allied Chemical Corporation, 1980, vol. 19, 75-90
- Polycarbonates. **D. Freitag ; U. Grigo ; P.R. Müller ; N. Nouvertne.** Encyclopedia of Polymer Science and Engineering. 1988, vol. 11, 648-718
- Polycarbonate. **Dres. U. Grigo ; K. Kircher ; P.R. Müller.** Kunststoff-Handbuch. vol. 3/1
- Polycarbonate, Polyacetale, Polyester, Celluloseester. Carl Hanser Verlag, 1992, 117-299
- **Hollemann-Wiberg.** Römpp Lexikon Chemie. Georg Thieme Verlag, 1999